# DEMANDE DE BREVET EUROPEEN

(11) **EP 1 100 137 A1**
(43) Date de publication de la demande: **16.05.2001**
(21) Numéro de dépôt: 00403112.6
(22) Date de dépôt: 09.11.2000
(51) Int. Cl.: H01M 4/80, H01M 4/32, H01M 10/34, H01M 10/28

(54) **Electrode non-frittée à support-tridimensionnel pour générateur électrochimique secondaire à électrolyte alcalin**

(30) Priorité: 10.11.1999 FR 9914116
(71) Demandeur: ALCATEL, 75008 Paris (FR)
(72) Inventeur: Amiel, Olivier, 16000 Angoulème (FR); Belkhir, Inès, 16000 Angouléme (FR); Freluche, Jean-Pierre, 16000 Angouléeme (FR); Pineau, Nathalie, 16440 Roullet (FR); Dupuy, Christian, 16230 Fontenille (FR); Babin, Stéphane, 16600 Ruelle sur Touvre (FR)
(74) Mandataire: Laroche, Danièle

(57) **Abrégé**

La présente invention a pour objet une électrode comprenant un support conducteur tridimensionnel poreux contenant une matière électrochimiquement active, le support comportant au moins un premier bord relié à une connexion et au moins un deuxième bord sensiblement parallèle audit premier bord, et un moyen empêchant le déplacement de ladite matière active disposé le long du deuxième bord. Le moyen est choisi parmi une pièce comportant une pliure en U disposée à cheval sur le deuxième bord, un revêtement superficiel et un traitement de modification de la texture du support.

Utilisation de l'électrode comme électrode positive de générateur électrochimique secondaire nickel-métal hydrurable.

## Description

La présente invention concerne une électrode de type non-fritté comportant un collecteur de courant tridimensionnel utilisable dans un générateur électrochimique secondaire à électrolyte alcalin, notamment un générateur du type nickel-cadmium ou nickel-métal hydrurable. Il s'agit en particulier d'une électrode positive au nickel dont le support conducteur est constitué d'une mousse métallique.

Jusqu'à une époque récente, les générateurs électrochimiques à électrolyte alcalin comportaient des électrodes à support conducteur fritté dans les pores duquel la matière active était déposée électrochimiquement ou chimiquement par plusieurs opérations successives de précipitation. Ce procédé de fabrication est toutefois long et coûteux. Pour répondre au besoin croissant des utilisateurs, ces électrodes peuvent aujourd'hui être réalisées de manière différente.

Une électrode à support conducteur non-fritté, dite aussi électrode empâtée ou plastifiée, comporte un collecteur de courant qui est enduit d'une pâte contenant la matière électrochimiquement active et un liant, auxquels on ajoute le plus souvent un ou plusieurs matériaux conducteurs. Le support conducteur peut être bidimensionnel ou plan, comme par exemple un feuillard plein ou perforé, un métal déployé, une grille ou un tissu. Le support conducteur peut encore être tridimensionnel comme un feutre ou une mousse, métallique ou en carbone, qui joue à la fois le rôle d'une structure d'accueil pour la matière électrochimiquement active, donnant sa tenue mécanique à l'électrode, et le rôle de collecteur de courant. Dans le cas des électrodes à collecteur de courant tridimensionnel, la pâte est introduite dans le support poreux qui est ensuite découpé à la dimension voulue. La découpe laisse apparents sur la tranche des brins métalliques provenant des fibres constituant le support. Ceux-ci risquent ultérieurement de perforer le séparateur et de provoquer des courts-circuits.

Lors de l'assemblage du générateur électrochimique, l'électrode doit être reliée électriquement à la borne de sortie de courant. Cette liaison s'effectue généralement par l'intermédiaire d'une connexion fixée d'une part sur la partie interne de la borne et d'autre part sur le support conducteur de l'électrode. La connexion est de préférence soudée sur le support pour rendre le contact électrique fiable. Lorsque le support de l'électrode est un support tridimensionnel de grand volume poreux, sa tranche présente ni la solidité, ni la quantité de métal nécessaires pour y souder directement une connexion. Plusieurs solutions ont été proposées pour renforcer le bord du support avant d'y fixer la connexion.

Les électrodes de polarité opposée sont ensuite assemblées face à face de part et d'autre d'un séparateur. Il est courant, notamment dans le cas de générateurs à électrodes spiralées, de décaler légèrement en hauteur les unes par rapport aux autres les électrodes de polarité différente, de telle sorte que le raccordement électrique des électrodes de chaque polarité à la borne correspondante s'effectue aux extrémités opposées du bobineau.

Dans des générateurs de type nickel-métal hydrurable, on a constaté qu'il se produisait un déplacement lent, ou fluage, de la matière active positive depuis le coeur de l'électrode vers la surface en direction du bord de l'électrode qui ne porte pas la connexion. Au bout d'un certain temps la matière positive dépasse le bord du séparateur et peut venir au contact de l'électrode négative et/ou de la connexion négative. Ce contact conduit dans tous les cas à l'établissement d'un courant de fuite responsable d'une forte autodécharge du générateur, et éventuellement à des courts-circuits. Ce phénomène est particulièrement présent dans le cas des électrodes de grande surface utilisées dans les générateurs de forte puissance nécessitant une décharge rapide (décharge complète en moins d'une heure), comme par exemple ceux destinés au domaine de l'outillage sans fil ou à celui des véhicules électriques.

Le document JP-2-72564 décrit un accumulateur alcalin à électrodes spiralée de telle sorte que l'anode et la cathode soient en saillie respectivement à chaque extrémité opposée, une connexion étant soudée respectivement sur chaque support en saillie. La cathode comprend un support poreux tridimensionnel dans lequel est introduite la matière active sous forme de pâte. Des courts-circuits internes peuvent survenir à cause du gonflement de la matière active positive dû au dégagement gazeux en cyclage. Ces courts circuits se produisent dans la zone de la cathode qui est du côté où le support de l'anode est en saillie. Afin de remédier à ce problème, ce document conseille d'introduire dans cette zone du support un adhésif résistant à l'alcali à la place de la matière active qui fonctionne comme barrière pour empêcher le déplacement de la matière active vers la connexion de l'anode. Lors de la fabrication de l'électrode, l'emplacement réservé pour l'adhésif est masqué. Le support est rempli de la pâte contenant la matière active, puis séché, comprimé et coupé. Une résine fondue est alors coulée dans la zone réservée qui durcie en refroidissant.

Cette solution présente plusieurs inconvénients. D'une part la zone où se trouve l'adhésif doit être exempte de matière active, ce qui nécessite soit d'utiliser un masque comme décrit dans le document, soit d'enlever la matière active qui aurait été introduite lors de la fabrication. L'une comme l'autre de ces solutions ne sont pas utilisables à l'échelle industrielle. D'autre part les brins métalliques provenant de la découpe risquent ultérieurement de provoquer des courts-circuits. L'adhésif se trouvant à l'intérieur du support ne permet pas d'éviter ces courts-circuits.

La présente invention a donc pour but de proposer une autre solution pour réduire encore le risque de courts-circuits dans une électrode de type non-fritté à support tridimensionnel.

L'invention a notamment pour but de proposer une électrode de type non-fritté à support tridimensionnel dans laquelle ce phénomène de fluage de la matière active au cours du temps est maîtrisé de telle sorte que l'on n'observe pas d'augmentation de l'autodécharge pendant toute la durée d'utilisation du générateur.

L'objet de la présente invention est une électrode comprenant un support conducteur tridimensionnel poreux contenant une matière électrochimiquement active, ledit support comportant au moins un premier bord relié à une connexion et au moins un deuxième bord sensiblement parallèle audit premier bord, et un moyen empêchant le déplacement de ladite matière active disposé le long dudit deuxième bord, caractérisé en ce que ledit moyen est choisit parmi une pièce comportant une pliure en U disposée à cheval sur ledit deuxième bord, un revêtement superficiel et un traitement de modification de la texture dudit support.

On entend par "bord de l'électrode" la zone de l'électrode constituée par sa tranche et les parties de sa surface qui lui sont contiguës.

Selon un premier mode de réalisation de l'invention, ledit moyen est une pièce comportant une pliure en U disposée à cheval sur ledit deuxième bord.

Ladite pièce peut être choisie parmi un ruban et une partie du séparateur. On peut rapporter une pièce en forme de ruban plié en U dans le sens longitudinal, ou bien utiliser une partie du séparateur prévue à cet effet qui est repliée sur le bord de l'électrode. Dans ce dernier cas, la pièce est constituée du matériau non-tissé en polyoléfine du séparateur .

Selon une variante ledit ruban est constitué d'un matériau électriquement isolant. De préférence ledit matériau isolant est choisi parmi un polymère, par exemple un matériau non-tissé, ou un composé cellulosique comme du papier.

Le polymère choisi peut être par exemple une polyoléfine comme le polyéthylène ou le polypropylène, ou un polyamide.

Selon une autre variante, ledit ruban est métallique. Le ruban métallique est par exemple en nickel, en acier nickelé ou en acier inoxydable.

De préférence ladite pièce est fixée sur ladite électrode. Elle peut être collé par un adhésif ou agrafée, et dans le cas d'un ruban métallique on peut le souder.

Selon un deuxième mode de réalisation de l'invention, ledit moyen est un revêtement superficiel dudit support. Ledit revêtement peut être déposé par pulvérisation ou par étalement sur la surface dudit support. Ce revêtement recouvre la surface du support mais ne pénètre pas dans ses pores.

De préférence ledit revêtement est choisi parmi un polymère comme le PTFE, un élastomère comme le SBR, un vernis, une peinture ou une paraffine.

Selon un troisième mode de réalisation de l'invention, ledit moyen est un traitement de modification de la texture dudit support. Il s'agit dans ce cas de réduire la porosité du support afin de créer une barrière qui retienne la matière active. Ledit traitement peut être choisi parmi la compression et la soudure..

Selon une variante, ledit traitement comprend en outre le pliage dudit deuxième bord. Le support débarrassé de la matière active peut être replié sur la partie du support contenant la matière active, puis laminé à l'épaisseur de l'électrode.

Ledit support conducteur tridimensionnel est choisi parmi une mousse et un feutre. De préférence ledit support conducteur est une mousse de nickel.

Ladite matière électrochimiquement active est un hydroxyde de nickel. Le terme "hydroxyde de nickel" signifie un hydroxyde de nickel, un hydroxyde contenant principalement du nickel et au moins un hydroxyde syncristallisé d'un autre élément (Zn, Co, Ca, Cd, Mg, Mn, Al, ...).

La présente invention a aussi pour objet un générateur électrochimique secondaire comportant une telle électrode qui est une électrode positive au nickel. Il s'agit principalement des générateurs à électrolyte alcalin comme les générateurs de type nickel-métal hydrurable, nickel-cadmium, nickel-fer ou nickel-zinc.

Selon une forme d'exécution préférentielle de l'invention, le générateur électrochimique secondaire est un générateur du type nickel-métal hydrurable.

La présente invention a comme avantage de créer une barrière mécanique qui empêche ou contient le déplacement de la matière active de l'électrode positive. En outre cette barrière évite la perforation du séparateur par des brins agressifs dépassant du support.

L'invention a aussi comme avantage de permettre à la matière active contenue dans le support le long du deuxième bord de fonctionner au moins partiellement, avec un rendement de l'ordre de 40% et ainsi de conserver une capacité élevée à l'électrode selon l'invention.

L'invention sera mieux comprise et d'autres avantages et particularités apparaîtront à la lecture de la description suivante de modes de réalisation, donnée à titre non limitatif, accompagnée des dessins annexés parmi lesquels :
- la figure 1 représente une électrode selon l'invention,
- la figure 2 est une vue en coupe de l'électrode de la figure 1,
- la figure 3 est une coupe d'un générateur électrochimique secondaire comprenant une électrode positive selon la présente invention,
- la figure 4 est une vue en coupe d'une variante d'une électrode selon l'invention,
- la figure 5 est un histogramme représentant la répartition des tensions de générateurs selon l'invention au repos,
- la figure 6 montre les courbes de cyclage d'électrodes selon l'invention.

### EXEMPLE 1

On fabrique une électrode A au nickel selon l'invention de la manière suivante.

Le collecteur de courant est en mousse de nickel de porosité au moins égale à 95%. Une pâte contenant la matière électrochimiquement active, qui est un hydroxyde de nickel, et un liant est introduite dans la porosité de la mousse. Le support poreux contenant la matière active est alors découpé pour obtenir une bande active d'environ 250mm de long et 32mm de large.

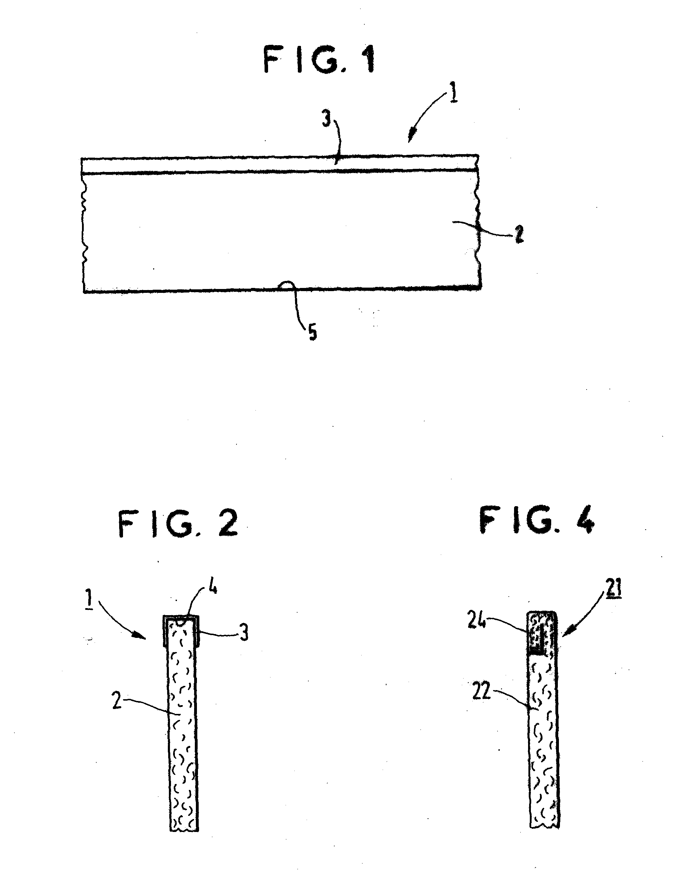

Pour réaliser l'électrode 1 représentée sur les figures 1 et 2, on utilise un ruban 3 adhésif en polypropylène, d'environ 4mm de largeur et d'épaisseur de l'ordre de 80µm. Des essais ont également été effectués en utilisant un ruban d'une épaisseur moindre, par exemple 30µm, et les résultats obtenus sont satisfaisants. Ce ruban est plié en U et disposé à cheval sur le bord longitudinal 4 de la bande active 2.

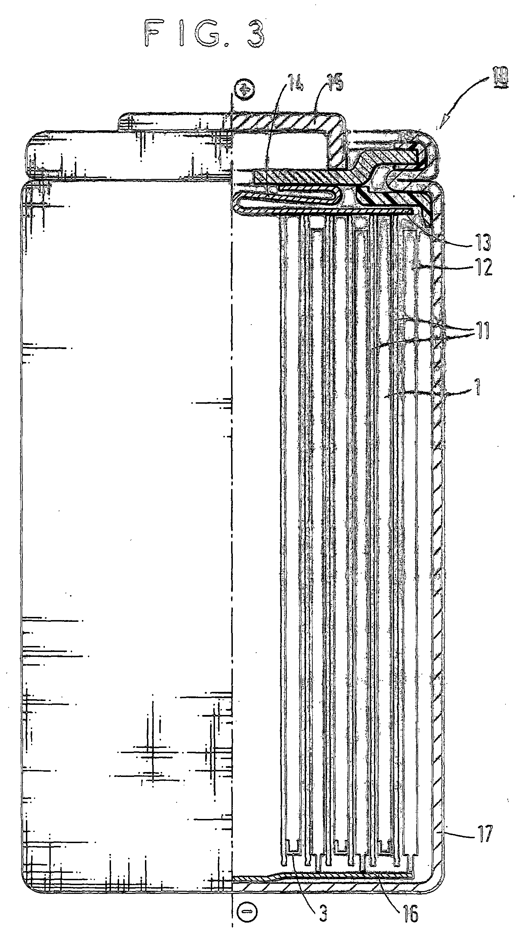

Un générateur 10 électrochimique secondaire du type nickel-métal hydrurable cylindrique, de format Cs (diamètre : 22mm ; hauteur : 42mm) et de capacité nominale 3Ah, tel que représenté en coupe sur la figure 3, est assemblé en utilisant l'électrode 1 au nickel précédemment réalisée.

On superpose l'électrode positive 1, un séparateur 11 en polyoléfine et une électrode négative 12 dont la matière électrochimiquement active est à base d'un alliage hydrurable. On spirale le faisceau électrochimique pour former un bobineau.

Sur la tranche de l'électrode positive 1 spiralée, on soude une pièce de connexion 13 qui est un disque en acier nickelé raccordé électriquement par une patte 14 à la borne de sortie de courant constituée par la couvercle 15. L'électrode négative 12 est reliée électriquement par un disque en acier nickelé 16 au godet 17 cylindrique du générateur 10.

Après introduction dans le godet 17, on imprègne le bobineau avec un électrolyte alcalin comprenant un mélange d'hydroxyde de potassium (KOH), d'hydroxyde de sodium (NaOH), et d'hydroxyde de lithium (LiOH) en solution aqueuse. Après addition de l'électrolyte, le générateur 10 est fermé de manière étanche par sertissage du couvercle 15 sur le godet 17.

### EXEMPLE 2

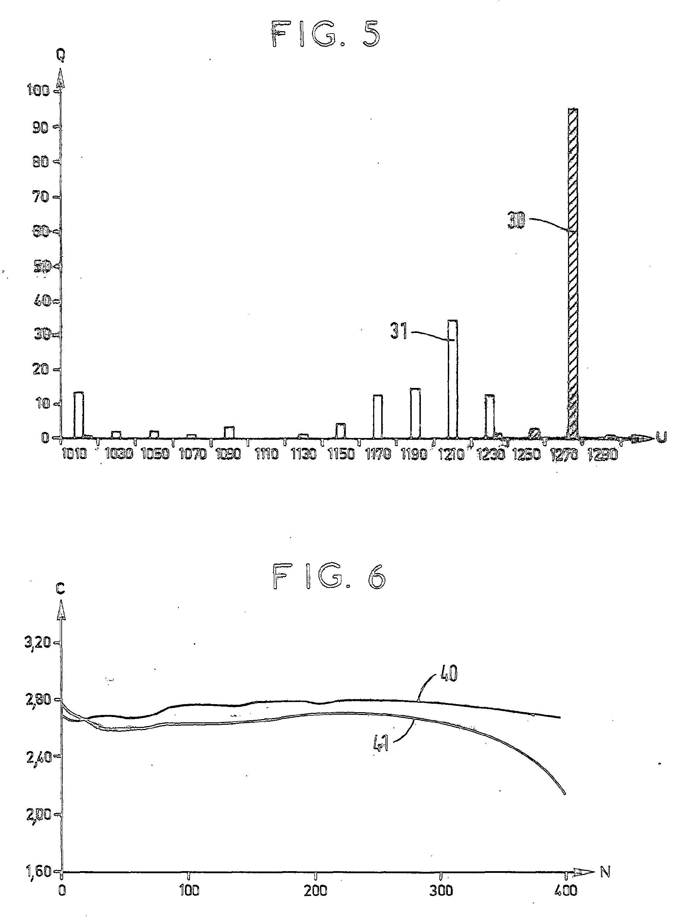

On fabrique une électrode B selon l'invention de la manière suivante. Après découpe d'une bande active 22 d'environ 250mm de long et 34mm de large, le bord du support 24 est nettoyé de la matière active qu'il contient par ultra-sons sur environ 2mm de large. Puis le support débarrassé de la matière active est replié sur la partie du support contenant la matière active et laminé à l'épaisseur de l'électrode 21 comme le montre la figure 4. Dans cette zone la porosité a donc été divisée environ par deux. On obtient une électrode ayant les dimensions de l'électrode de l'exemple 1.

Un générateur analogue à celui de l'exemple 1 mais contenant l'électrode B est assemblé.

### EXEMPLE 3

A titre de comparaison on assemble un générateur analogue à celui de l'exemple 1 mais contenant une électrode C constituée seulement par la bande active découpée 2 comme décrit dans l'exemple 1.

### EXEMPLE 4

On fabrique une électrode D selon l'invention de la manière suivante. Après découpe de la bande active comme décrit dans l'exemple 1, on place à cheval sur le bord de l'électrode une bande de papier de 4mm de largeur qui est fixée par un adhésif.

### EXEMPLE 5

On fabrique une électrode E selon l'invention de la manière suivante. Après découpe de la bande active comme décrit dans l'exemple 1, on place à cheval sur le bord de l'électrode une bande de matériau non-tissé en polyamide de 4mm de largeur qui est fixée par un adhésif.

### EXEMPLE 6

On fabrique une électrode F selon l'invention de la manière suivante. Après découpe de la bande active comme décrit dans l'exemple 1, on dépose par pulvérisation une couche de polytétrafluoroéthylène (PTFE).

### EXEMPLE 7

On fabrique une électrode G selon l'invention de la manière suivante. Après découpe de la bande active comme décrit dans l'exemple 1, on introduit l'électrode dans un séparateur en polyoléfine plié en deux pour former un étui. De part et d'autre de l'électrode positive entourée du séparateur on place une électrode négative, et on spirale le faisceau électrochimique.

On compare les générateurs précédemment assemblés contenant les électrodes A à C.

Après formation, les générateurs sont chargés à environ 30 à 40% de leur capacité nominale. Ils sont ensuite soumis à un repos de 13 jours à température ambiante. On mesure alors leur tension. Les résultats sont rassemblés sous la forme d'un histogramme représenté sur la figure 5 représentant la quantité de générateurs Q en % ayant la même valeur de tension U en mV. Les générateurs contenant une électrodes A ou B, qui donnent des résultats du même ordre, sont désignés par la référence 30, et les générateurs contenant une électrode C sont désignés par la référence 31.

On constate que pratiquement tous les générateurs comprenant une électrode A ou B selon l'invention présente une tension comprise entre 1,25 et 1,30 Volts. Par contre les générateurs comportant une électrode C ont des tensions plus basses et beaucoup plus dispersées ; une forte proportion de ces générateurs présente des courts-circuits provoqués par le déplacement de la matière active.

Des générateurs contenant les électrodes A et C sont ensuite cyclés dans les conditions suivantes :
- charge à 0,5 lc, où lc est le courant nécessaire pour décharger la capacité nominale du générateur en une heure, jusqu'à une baisse de tension - U de 1% au-delà de la tension maximale atteinte,
- décharge à 4Ic jusqu'à une tension de 0,8V par générateur,
- mise au repos pendant 30 à 60mn.

La figure 6 représente respectivement la courbe de cyclage 60 de l'électrodes A selon l'invention et la courbe 61 de l'électrode comparative C. On a représenté l'évolution de la capacité C en Ah en ordonnée en fonction du nombre de cycles N en abscisse. A partir de 300 cycles on observe une dégradation de la capacité du générateur contenant l'électrode comparative C (courbe 41), alors que la capacité du générateur contenant l'électrode A (courbe 40) selon l'invention a peu varié.

## Revendications

1. Electrode comprenant un support conducteur tridimensionnel poreux contenant une matière électrochimiquement active, ledit support comportant au moins un premier bord relié à une connexion et au moins un deuxième bord sensiblement parallèle audit premier bord, et un moyen empêchant le déplacement de ladite matière active disposé le long dudit deuxième bord, caractérisé en ce que ledit moyen est choisi parmi une pièce comportant une pliure en U disposée à cheval sur ledit deuxième bord, un revêtement superficiel et un traitement de modification de la texture dudit support.

2. Electrode selon la revendication 1, dans laquelle ladite pièce est choisie parmi un ruban et une partie du séparateur.

3. Electrode selon la revendication 2, dans laquelle ledit ruban est constitué d'un matériau électriquement isolant.

4. Electrode selon la revendication 3, dans laquelle ledit matériau est choisi parmi un polymère ou un composé cellulosique.

5. Electrode selon la revendication 2, dans laquelle ledit ruban est métallique.

6. Electrode selon l'une des revendications 1 à 5, dans laquelle ladite pièce est fixée sur ladite électrode.

7. Electrode selon la revendication 1, dans laquelle ledit revêtement superficiel est déposé par pulvérisation ou par étalement .

8. Electrode selon la revendication 7, dans laquelle ledit revêtement est choisi parmi un polymère, un élastomère, un vernis, une peinture ou une paraffine.

9. Electrode selon la revendication 1, dans laquelle ledit traitement est choisi parmi la compression et la soudure.

10. Electrode selon la revendication 9, dans laquelle ledit traitement comprend en outre le pliage dudit deuxième bord.

11. Electrode selon l'une des revendications précédentes, dans laquelle ledit support conducteur est choisi parmi une mousse et un feutre.

12. Electrode selon la revendication 11, dans lequel ledit support conducteur est une mousse de nickel.

13. Electrode selon l'une des revendications précédentes, dans laquelle ladite matière active est un hydroxyde de nickel.

14. Générateur électrochimique secondaire comportant une électrode selon l'une des revendications précédentes, dans lequel ladite électrode est une électrode positive au nickel.

15. Générateur selon la revendication 14, du type nickel-métal hydrurable.
